# EUROPÄISCHE PATENTSCHRIFT

(11) **EP 2 848 117 B1**
(45) Veröffentlichungstag und Bekanntmachung des Hinweises auf die Patenterteilung: **18.11.2015**
(21) Anmeldenummer: 14002979.4
(22) Anmeldetag: 28.08.2014
(51) Int. Cl.: A01K 39/012

(54) **Geflügelfutterschale**
Feeding pan for poultry
Distributeur d'aliments pour volailles

(30) Priorität: 12.09.2013 DE 202013104157 U
(43) Veröffentlichungstag der Anmeldung: 18.03.2015
(73) Patentinhaber: Fienhage Poultry Solutions GmbH, 49424 Lutten (DE)
(72) Erfinder: Fienhage, Hans-Jürgen, 49424 Lutten (DE); Rensing, Frank, 49429 Visbek (DE)
(74) Vertreter: Hoffmeister, Helmut

(56) Entgegenhaltungen:
- EP-A2- 2 394 510
- WO-A1-2008/131198
- DE-C1- 10 164 122
- US-A- 5 718 187
- US-A- 5 875 733

## Beschreibung

Die Erfindung betrifft eine Futterschale für die Aufzucht von Geflügel, insbesondere von in einem Stall freilaufend gehaltenem Mastgeflügel, wobei die Futterschale an einem über dem Boden des Stalles heb- und senkbar gehaltenen Futterförderrohr angehängt ist und das Futterförderrohr wenigstens eine Öffnung aufweist, durch welches Futter in die Futterschale gelangen kann, wobei die Futterschale folgende Bauteile umfasst:
- ein Bodenteil mit einer umlaufenden Futterrinne, die nach außen hin durch einen peripheren Rand mit einem äußeren Kragen umfasst ist und nach innen eine kegelförmige Kuppell aufweist,
- ein Deckelteil, das nach außen von einem umlaufenden Rand umfasst ist,
- ein Kopfteil mit einer Öffnung zum Aufstecken auf das Futterförderrohr,
wobei Kopfteil, Deckelteil und Bodenteil miteinander lösbar verbunden sind und zumindest Deckelteil und Bodenteil in Richtung einer senkrecht zum umlaufenden Rand ausgerichteten Achse gegeneinander verschiebbar sind.

Eine Futterschale der eingangs genannten Art ist in WO2008/131198 beschrieben. Die bekannte Futterschale besteht aus sieben Teilen, nämlich einem Deckelteil, einem schalenförmigen Bodenteil und dazwischen liegenden, ineinander längs einer gemeinsamen Achse greifenden fünf Teilen, darin einem zweiteiligen Fallrohr. Das Deckelteil weist mehrere zu einem Kranz zulaufende Streben auf. Nachteilig bei der bekannten Futterschale ist ihr komplizierter Aufbau, ein relativ hoher Rand des Deckelteils und eine durch die Anordnung der Streben bedingte, begrenzte Anzahl separater Futterplätze.

Die Aufgabe der Erfindung ist, eine Futterschale der im Oberbegriff genannten Art zu konzipieren, die sich durch einen vereinfachten Aufbau auszeichnet und eine simple Montage sowie Demontage ermöglicht.

Diese Aufgabe wird durch eine gattungsgemäße Futterschale dadurch gelöst, dass das Deckelteil an seinem dem umlaufenden Rand abgewandten Ende mit wenigstens einem Rastelement versehen ist, welches im zusammengesetzten Zustand der Futterschale in eine an einem Scheitel der Kuppel eingebrachte Rastöffnung eingreift.

Vorzugsweise umfasst das Rastelement zwei spiegelsymmetrisch gegenüber der besagten Achse angeordnete, federnde Zungen, die jeweils eine Anschlagkante zum Einrasten in die besagte Rastöffnung und zum Aufhängen des Bodenteils am Deckelteil aufweisen.

Vorzugsweise ist das Deckelteil axial verschiebbar gegenüber dem Bodenteil angeordnet. Diese axiale Verschiebbarkeit ermöglicht eine Höhenverstellung entlang einer Verschiebestrecke, die durch einen Abstand zwischen der Anschlagkante der Zunge und einer unteren Kante der Rastöffnung definiert ist.

Sowohl das Deckelteil, als auch Bodenteil können als Rotationskörper oder als prismatische Körper ausgeführt sein. Demnach kann das Deckelteil und Bodenteil von seinem äußeren Umriss her etwa einer Dunstabzugshaube ähneln.

Vorzugsweise weist das Deckelteil eine kegelstumpfförmige Kuppel auf, die in ein prismatisches Halteteil ausläuft, mit dem das Kopfteil eine Rast- bzw. Schnappverbindung bilden kann. Zu diesem Zweck kann das Halteteil wenigstens zwei federnde Haltelaschen aufweisen, welche über eine freie Kante des Halteteils ragen und jeweils mit einem Knopf enden, der in eine am Kopfteil eingebrachte Rastöffnung eingreift.

Vorzugsweise ist das Deckelteil in seinem dem Bodenteil zugewandten Bereich von einem umlaufenden Rand umfasst, welcher über radiale Querstreben mit einem umlaufenden Steg verbunden ist, am dem mehrere Auslassfenstern für das Futter nebeneinander angeordnet sind.

Die Querstreben des am Bodenteil eingesetzten Deckelteils können die Futterrinne in mehrere Futterplätze aufteilen. Die Anzahl der Futterplätze kann im Bereich zwischen drei und fünfzig, bevorzugt zwischen 16 und 20 liegen. Die Anzahl der Futterplätze hängt von unterschiedlichen Faktoren, darin von Dimensionierung der Futterschale und von Anforderungen an Tierhaltung ab und daher kann praktisch unbegrenzt groß sein.

In das Bodenteil kann ebenso ein umlaufender, mehrere Auslassfenster aufweisender Steg eingebaut sein. Vorzugsweise sind die beiden besagten Stege senkrecht zu einer Standfläche des Bodenteils ausgerichtet, wobei im zusammengesetzten Zustand der Futterschale der Steg des Deckelteils den Steg des Bodenteils umgibt. Diese Anordnung ermöglicht das Gleiten der Stege übereinander bei der Höhenverstellung.

Vorteilhaft ist, wenn der Steg am Bodenteil mit Stützfüßen versehen ist, die einen Abstand zwischen einer unteren Stegkante und der Futterrinne bestimmen.

Bei der Höhenverstellung sind grundsätzlich zwei Stellungen des Deckelteils zu unterscheiden:
- eine obere Stellung, bei der die Auslassfenster des Bodenteils von einem fensterlosen Bereich des am Deckelteil angeordneten Steges geschlossen bleiben,
- eine untere Stellung, bei der die Auslassfenster des Bodenteils mit den Auslassfenstern des am Deckelteil angeordneten Steges koinzidieren und dadurch durchgängige Öffnungen ausbilden.

Von großem Vorteil der Futterschale gemäß Erfindung ist, dass die vorgenommene Höhenverstellung in Verbindung mit den niedrig liegenden Auslassfenstern einen ungestörten, freien Zugang der Jungvögel zu den einzelnen Futterplätzen ermöglicht, so dass die Tiere nicht den Rand betreten müssen. So können die Küken bereits ab ersten Lebenstag, auf festem Untergrund stehend zum Futter gelangen.

Als insbesondere vorteilhaft kann die einfache, blitzschnelle, werkzeuglose Montage und Demontage der am Futterförderrohr angehängten Futterschale angesehen werden. Die Futterschale kann aus lediglich drei Teilen (Kopfteil, Deckelteil und Bodenteil) zusammengesetzt werden. Die einfache Konstruktion erleichtert auch die Reinigung bzw. nach Bedarf die Desinfizierung der Futterschale.

Die Teile der Futterschale können aus unterschiedlichen Materialien, bevorzugt jedoch aus thermoplastischem Kunststoff im Spritzgussverfahren hergestellt sein.

Die Erfindung ist in einem bevorzugten Ausführungsbeispiel anhand der Zeichnung näher erläutert. Die Figuren zeigen:
Fig. 1 eine am Futterförderrohr angehängte Futterschale gemäß Erfindung, in einer perspektivischen Ansicht von oben;
Figuren 2 a und 2b die Futterschale gemäß Fig. 1 in einem Längsschnitt, d. h. entlang einer am Kopfteil befindlichen Aufnahmeöffnung für das Futterförderrohr;
Fig. 3 die Futterschale in einem Schnitt A - A gemäß Fig. 2a, im abgesenkten Zu stand des Deckelteils;
Fig. 4 ein vergrößertes Detail "Z" gemäß Fig. 3;
Fig. 5 die Futterschale mit abgesenktem Bodenteil in einem Schnitt, welcher ebenso dem Schnitt A - A, jedoch bezogen auf Fig. 2b entspricht;
Fig. 6 ein vergrößertes Detail "W" gemäß Fig. 5 und
Fig. 7 die Futterschale in einer auseinander gezogenen Darstellung.

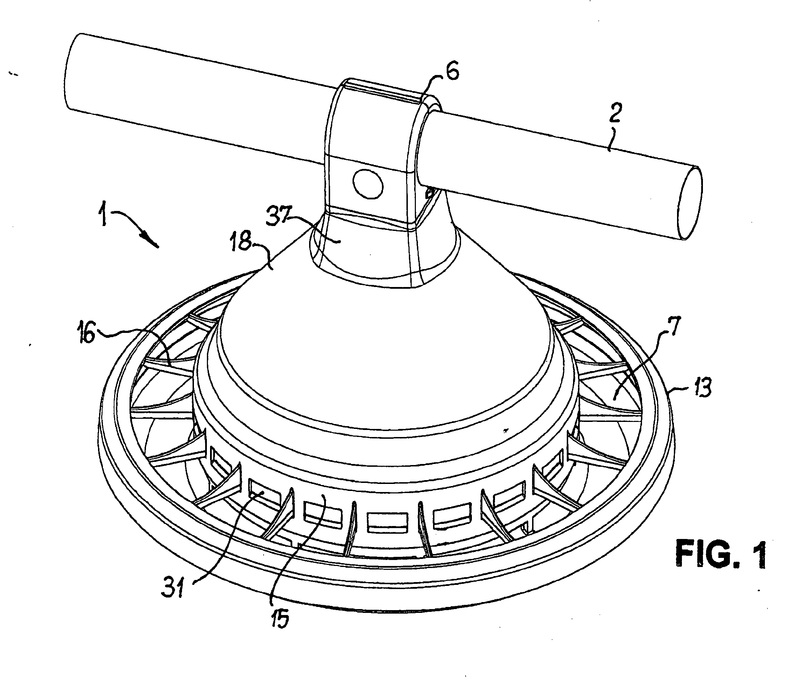

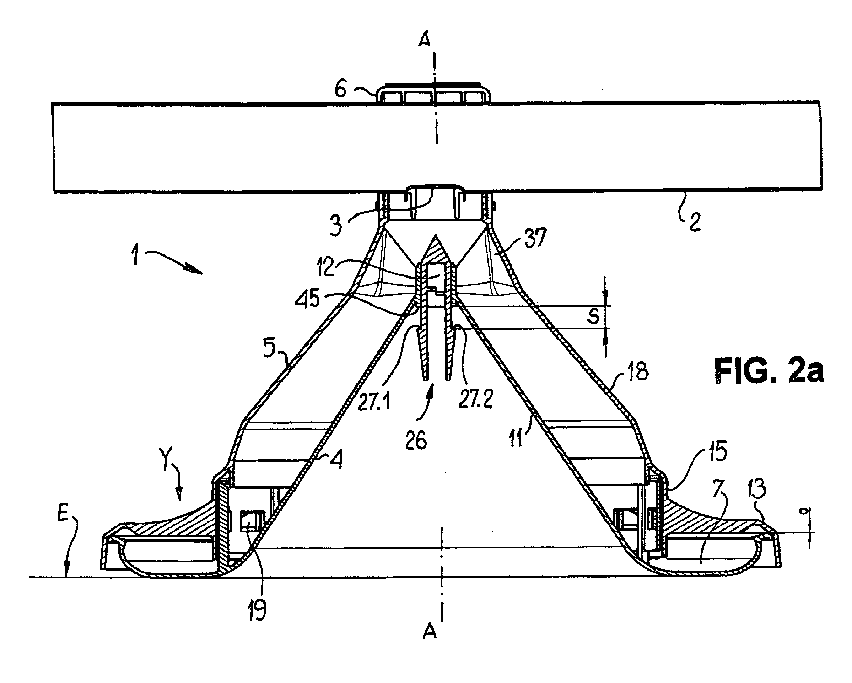

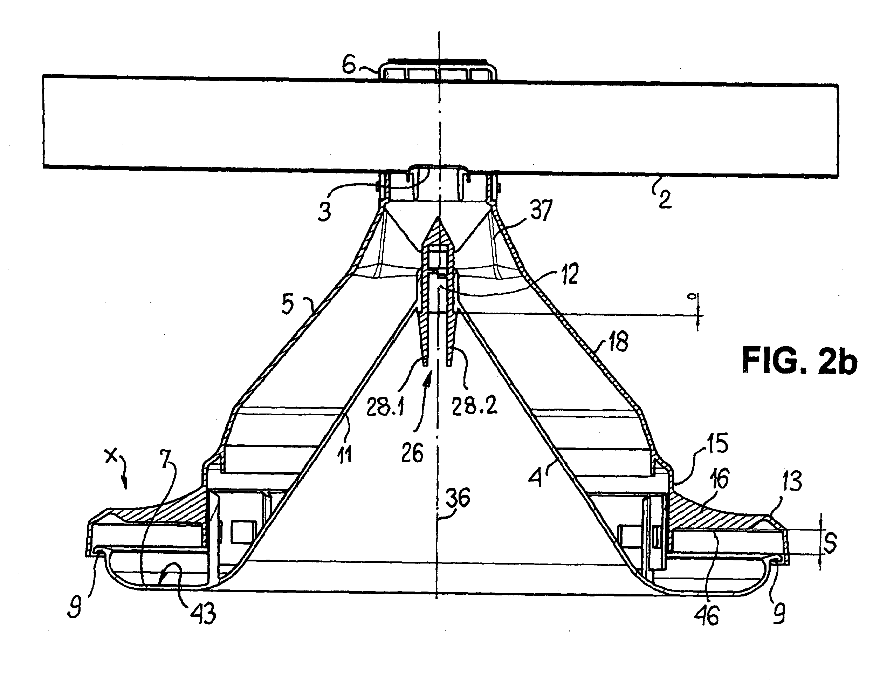

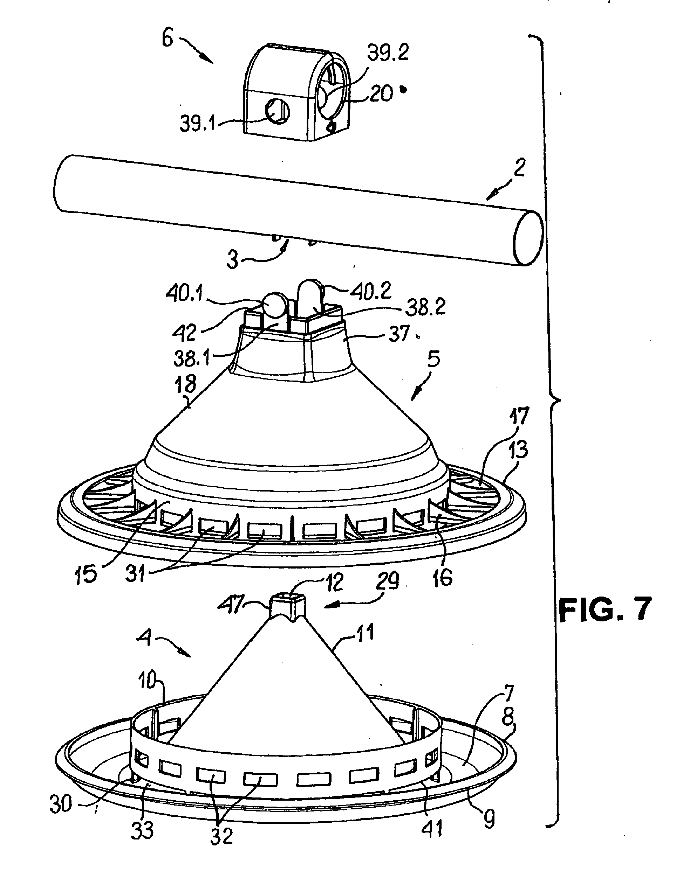

Die Figuren1, 2a, 2b und insbesondere Fig. 7 zeigen eine an einem Futterförderrohr 2 angehängte Futterschale 1 gemäß Erfindung, bestehend aus einem Deckelteil 5, einem Kopfteil 6 und einem Bodenteil 4. In Fig. 1 ist nur eine Futterrinne 7 des Bodenteils 4 teilweise sichtbar.

Die im Weiteren verwendeten Begriffe: "untere" und "obere" beziehen sich auf die Lage der Konstruktionselemente der Futterschale 1, wie in der Figur 1 dargestellt, wobei das unterste Teil die Futterrinne 7 ist.

Das Deckelteil 5 weist eine in seinem unteren Bereich abgestufte äußere Kuppel 18 auf, die oben sich an einen prismatischen Halteteil 37 anschließt. Weiterhin weist das Deckelteil 5 einen umlaufenden Steg 15 auf, welcher über radiale Querstreben 16 mit einem äußeren Rand 13 des Deckelteils 5 verbunden ist. Die Querstreben 16, der Rand 13 und der Steg 15 liegen im unteren Bereich des Deckelteils 5. Die Querstreben 16 lassen zwischen sich Öffnungen 17 frei, die auch von dem Steg 15 und dem Rand 13 begrenzt sind. Jeweils zwei sich benachbarte Querstreben 16 begrenzen also einen Futterplatz.

Ferner sind am Steg 15 zahlreiche rechteckige Auslassfenster 31 in gleichen Abständen voneinander eingebracht, wobei jedes Auslassfenster 31 zwischen zwei sich benachbarten Querstreben 16 angeordnet ist. Die Auslassfenster 31 können auch andere, beispielsweise runde Umrisse haben.

Wichtig ist, dass der Steg 15 eine untere, umlaufende Kante 44 aufweist, welche von den Auslassfenstern 31 ausreichend weit beabstandet ist, um einen etwa schürzenartigen, fensterlosen Bereich 34 bilden zu können.

Weiterhin weist das Deckelteil 5 ein dem umlaufenden Rand 13 abgewandtes Rastelement 26 auf, welches im zusammengesetzten Zustand der Futterschale 1 in eine an einem Scheitel 29 einer Kuppel 11 des Bodenteils 4 eingebrachte Rastöffnung 12 (vgl. Fig. 7 unten) eingreift. Die Rastöffnung 12 ist durch ein oberes, schornsteinförmiges Element 47 gebildet.

Das besagte Rastelement 26 weist zwei federnde, spiegelsymmetrisch gegenüber einer Achse 36 (vgl. Fig. 2b) angeordnete Zungen 28.1, 28.2 auf, die detailliert in den Figuren 2a und 2b gezeigt sind. Die Zungen 28.1, 28.2 weisen jeweils eine Anschlagkante 27.1, 27.2 zum Einrasten in die besagte Rastöffnung 12 (mit unterer Kante 45) und zum Aufhängen des Bodenteils 4 auf.

Das Deckelteil 5 ist längs der Achse 36 verschiebbar gegenüber dem Bodenteil 4 angeordnet und zwar entlang einer Verschiebestrecke S, die durch einen Abstand zwischen der Anschlagkante 27.1, 27.2 und der unteren Kante 45 (vgl. Figuren 2a und 2b) der Rastöffnung 12 definiert ist. Eine Verschiebestrecke S mit dem Betrag 0 ist der Fig. 2b zu entnehmen. Grundsätzlich entspricht die Schiebestrecke S dem Abstand zwischen einem äußeren Kragen 9 des Bodenteils 4 und einer unteren Kante 46 der Querstrebe 16.

Das Halteteil 37 an der Kuppel 18 des Deckelteils 5 ist mit dem Kopfteil 6 über zwei federnde Haltelaschen 38.1, 38.2 (vgl. Fig. 7) lösbar zu verbinden. Die Haltelaschen 38.1, 38.2 ragen über eine freie Kante 42 des Halteteils 37 nach oben und enden dort jeweils mit einem runden Knopf 40.1, 40.2, welcher in eine am zweiteiligen Kopfteil 6 eingebrachte Rastöffnung 39.1, 39.2 eingreift. Das Kopfteil 6 weist eine durchgehende Öffnung 20 zum Aufstecken auf das Futterförderrohr 2 auf. Am Futterförderrohr 2 ist eine Öffnung 3 (vgl. Fig. 2b) eingearbeitet, welche den weiteren Transport und das Befüllen mit Futtermittel zur Futterschale 1 ermöglicht.

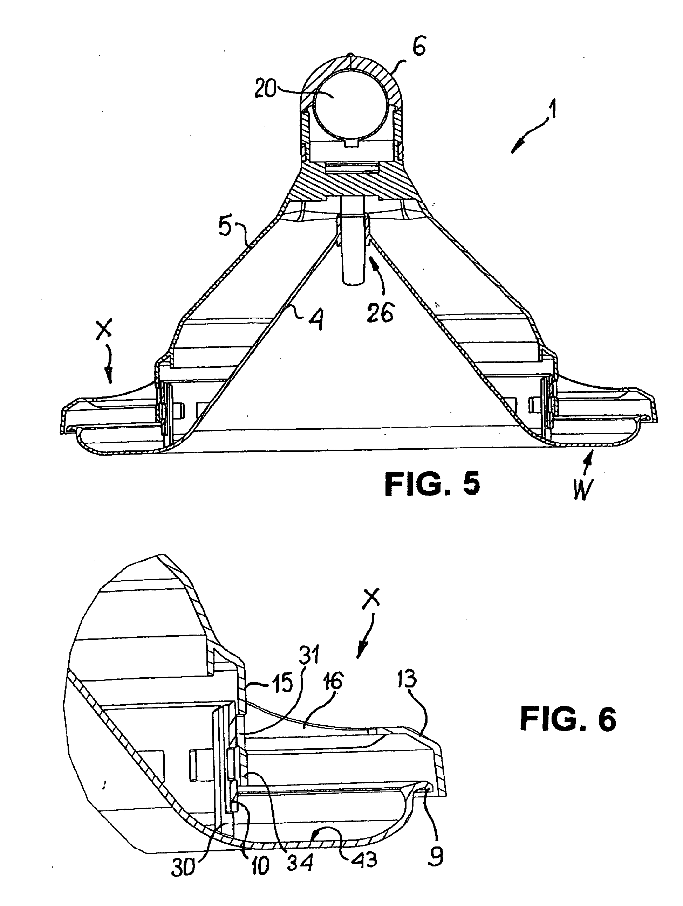

Gemäß Figuren 2a bis 7 weist das Bodenteil 4 die bereits erwähnte, ringförmige Futterinne 7, einen äußeren Rand 8 und einen die Kuppel 11 etwa in ihrer Kegelbasis umgebenden Steg 10 mit Stützfüßen 30 auf. Am Steg 10 sind zahlreiche Auslassfenster 32 nebeneinander angeordnet, deren Anzahl und Anordnung der des Steges 15 des Deckelteils 5 entspricht. Weiterhin weist der Steg 10 eine der Futterrinne 7 zugewandte, untere Kante 41 (vgl. Fig. 7) auf. Zwischen den Stützfüßen 30 sind noch weitere Auslassfenster 33 angeordnet, welche durch die Kante 41 und eine Oberfläche 43 der Futterrinne 7 begrenzt sind.

Den Figuren 2a und 2b ist zu entnehmen, dass die beiden umlaufenden Stege 10; 15 im zusammengesetzten Zustand der Futterschale 1 senkrecht zu einer Standfläche E des Bodenteils 4 ausgerichtet sind.

Die Höhenverstellung des Deckelteils 5 ist anhand der Figuren 2a, 3, 4 und Figuren 2b, 5, 6 erläutert.

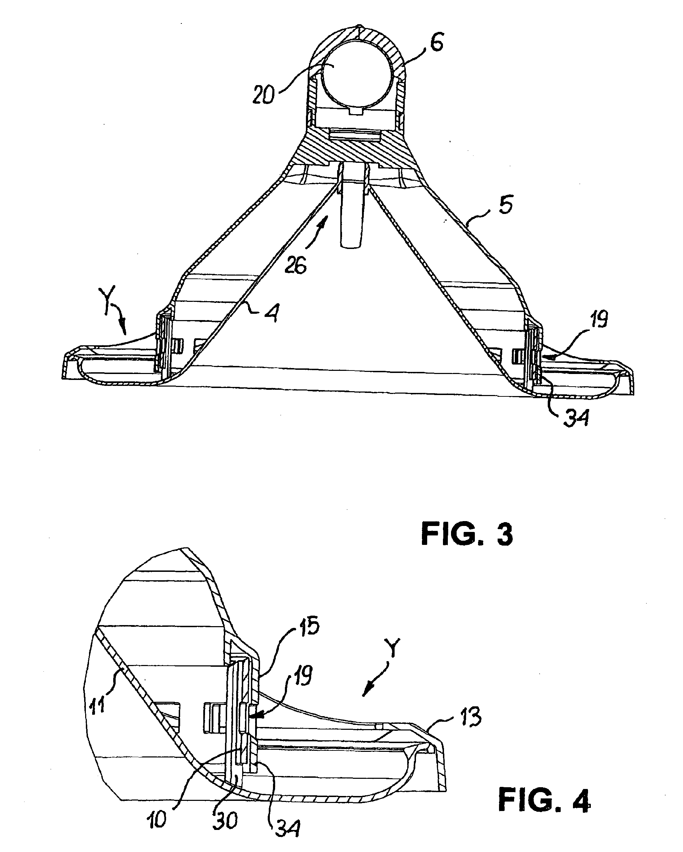

Bei einer unteren Stellung Y (Figuren 2a, 3, 4) koinzidieren die Auslassfenster 32 des Bodenteils 4 mit den Auslassfenstern 31 am Deckelteil 5 und bilden durchgehende Öffnungen 19 (vgl. Fig. 4).

Bei einer oberen Stellung X sind die Auslassfenster 32 des Bodenteils 4 von dem fensterlosen Bereich 34 des Steges 15 verdeckt.

Die Verschiebestrecke S zwischen zwei Stellungen X, Y beträgt im vorliegenden Fall höchstens 11 mm.

### Bezugszeichenliste:

- 1.: Futterschale
- 2.: Futterförderrohr
- 3.: Öffnung
- 4.: Bodenteil
- 5.: Deckelteil
- 6.: Kopfteil
- 7.: Futterrinne
- 8.: Rand
- 9.: Kragen
- 10.: Steg
- 11.: Kuppel (v. 4)
- 12.: Rastöffnung
- 13.: Rand (v. 5)
- 15.: Steg (v. 5)
- 16.: Querstrebe
- 17.: Öffnung (Futterplatz)
- 18.: Kuppel (v.5)
- 19.: Öffnung
- 20.: Öffnung
- 26.: Rastelement
- 27.1, 27.2: Anschlagkante
- 28.1, 28.2: Zunge
- 29.: Scheitel
- 30.: Stützfuß
- 31; 32, 33: Auslassfenster
- 36.: Achse
- 37.: Halteteil
- 38.1, 38.2: Haltelasche
- 39.1, 39.2: Rastöffnung
- 40.1, 40.2: Knopf
- 41.: untere Kante (v. 10)
- 42.: freie Kante
- 43.: Oberfläche
- 44.: Kante (v. 15)
- 45.: Kante (v. 12)
- 46.: untere Kante (v. 16)
- 47.: schornsteinförmiges Element
- A - A: Schnitt
- E: Standfläche
- S: Verschiebestrecke
- X; Y: Stellung
- W: Detail

## Patentansprüche

1. Futterschale (1) für die Aufzucht von Geflügel, insbesondere von in einem Stall freilaufend gehaltenem Mastgeflügel, wobei die Futterschale (1) an einem über dem Boden des Stalles heb- und senkbar gehaltenen Futterförderrohr (2) angehängt ist und wobei das Futterförderrohr (2) wenigstens eine Öffnung (3) aufweist, durch welches Futter in die Futterschale (1) gelangen kann, und wobei die Futterschale (1) folgende Bauteile umfasst:
- ein Bodenteil (4) mit einer umlaufenden Futterrinne (7), die nach außen hin durch einen peripheren Rand (8) mit einem äußeren Kragen (9) umfasst ist und nach innen eine kegelförmige Kuppel (11) aufweist,
- ein Deckelteil (5), das nach außen von einem umlaufenden Rand (13) umfasst ist,
- ein Kopfteil (6) mit einer Öffnung (20) zum Aufstecken auf das Futterförderrohr (2),
wobei Kopfteil (6), Deckelteil (5) und Bodenteil (4) miteinander lösbar verbunden sind und zumindest Deckelteil (5) und Bodenteil (4) in Richtung einer senkrecht zum umlaufenden Rand (8; 13) ausgerichteten Achse (36) gegeneinander verschiebbar sind,
**dadurch gekennzeichnet, dass**
das Deckelteil (5) an seinem dem umlaufenden Rand (13) abgewandten Ende (25) mit wenigstens einem Rastelement (26) versehen ist, welches im zusammengesetzten Zustand der Futterschale (1) in eine an einem Scheitel (29) der Kuppel (11) eingebrachte Rastöffnung (12) eingreift.

2. Futterschale (1) nach Anspruch 1, **dadurch gekennzeichnet, dass** das Rastelement (26) zwei spiegelsymmetrisch gegenüber der Achse (36) angeordnete, federnde Zungen (28.1, 28.2) umfasst, die jeweils eine Anschlagkante (27.1, 27.2) zum Einrasten in die besagte Rastöffnung (12) und zum Aufhängen des Bodenteils (4) aufweisen.

3. Futterschale (1) nach Anspruch 2, **dadurch gekennzeichnet, dass** die Anschlagkante (27.1, 27.2) und damit das Deckelteil (5) axial verschiebbar gegenüber dem Bodenteil (4) angeordnet ist.

4. Futterschale (1) nach Ansprüchen 1 bis 3, **dadurch gekennzeichnet, dass** das Deckelteil (5) kegelstumpfförmig ist und in ein prismatisches Halteteil (37) ausläuft, mit dem das Kopfteil (6) verrastbar ist.

5. Futterschale (1) nach Anspruch 4, **dadurch gekennzeichnet, dass** das Halteteil (37) zwei federnde Haltelaschen (38.1, 38.2) aufweist, welche über eine freie Kante (42) des Halteteils (37) ragen und jeweils mit einem Knopf (40.1, 40.2) enden, der in eine am Kopfteil (6) eingebrachte Rastöffnung (39.1, 39.2) eingreift.

6. Futterschale (1) nach einem der Ansprüche 1 bis 5, **dadurch gekennzeichnet, dass**
- in das Bodenteil (4) ein umlaufender, zwischen dem Rand (8) und der Kuppel (11) angeordneter Steg (10) mit Stützfüßen (30) eingebaut ist,
- der Steg (10) eine der Futterrinne (7) zugewandte Kante (41) aufweist,
- am Steg (10) Auslassfenster (32) angeordnet sind,
- und zwischen den Stützfüßen (30) weitere Auslassfenster (33) vorgesehen sind, die durch die Kante (41) des Steges (10) und eine Oberfläche (43) der Futterrinne (7) begrenzt sind.

7. Futterschale (1) nach einem der Ansprüche 1 bis 6, **dadurch gekennzeichnet, dass**
- das Deckelteil (5) einen umlaufenden Steg (15) aufweist, welcher über radiale Querstreben (16) mit dem Rand (13) verbunden ist, wobei die Querstreben (16) zwischen sich Öffnungen (17) frei lassen,
- am Steg (15) Auslassfenster (31) eingebracht sind, die jeweils zwischen zwei Querstreben (16) angeordnet sind,
- der Steg (15) eine freie, umlaufende Kante (44) aufweist,
- und zwischen den Auslassfenstern (31) und der Kante (44) ein fensterloser Bereich (34) des Steges (15) liegt.

8. Futterschale (1) nach Ansprüchen 6 und 7, **dadurch gekennzeichnet, dass** die Stege (10; 15) im zusammengesetzten Zustand der Futterschale (1) senkrecht zu einer Standfläche (E) des Bodenteils (4) ausgerichtet sind.

9. Futterschale (1) nach Ansprüchen 6 und 7, **dadurch gekennzeichnet, dass**
- die Auslassfenster (32) des Bodenteils (4) - bei in einer oberen Stellung (X) befindlichem Deckelteil (5) - vom fensterlosen Bereich (34) des am Deckelteil (5) angeordneten Steges (15) geschlossen sind, und
- bei in einer unteren Stellung (Y) befindlichem Deckelteil (5) die Auslassfenster (32) des Bodenteils (4) mit den Auslassfenstern (31) des am Deckelteil (5) angeordneten Steges (15) koinzidieren und dort durchgängige Öffnungen (19) ausbilden.

10. Futterschale (1) nach einem der Ansprüche 1 bis 9, **dadurch gekennzeichnet, dass** das Kopfteil (6), Deckelteil (5) und Bodenteil (4) aus thermoplastischem Kunststoff hergestellt sind.

11. Futterschale (1) nach einem der Ansprüche 1 bis 10, **dadurch gekennzeichnet, dass** der Rand (8) des Bodenteils (4) sowie der Rand (13) des Deckelteils (5) in Draufsicht auf die Standfläche (E) kreisrund, elliptisch oder polygonal ist.

## Claims

1. Feeding pan (1) for rearing poultry, in particular fattened poultry kept loose within a barn, wherein the feeding pan (1) is suspended on a feed conveying pipe (2) held so that it can be raised and lowered above the floor of the barn, and wherein the feed conveying pipe (2) has at least one opening (3) through which feed can enter the feeding pan (1), and wherein the feeding pan (1) comprises the following components:
- a base part (4) with a peripheral feed channel (7) which is surrounded towards the outside by a peripheral edge (8) with an outer collar (9), and on the inside has a conical turret (11),
- a cover part (5) which is surrounded on the outside by a peripheral edge (13),
- a head part (6) with an opening (20) for placement onto the feed conveying pipe (2), wherein the head part (6), cover part (5) and base part (4) are releasably connected to one another, and at least the cover part (5) and base part (4) can be displaced with respect to one another in the direction of an axis (36) oriented perpendicular to the peripheral edge (8; 13),
**characterised in that**
the cover part (5) is provided on the end (25) thereof remote from the peripheral edge (13) with at least one latch element (26) which, when the feeding pan (1) is in the assembled state, engages in a latch opening (12) provided at a peak (29) of the turret (11).

2. Feeding pan (1) as claimed in claim 1, **characterised in that** the latch element (26) comprises two resilient tongues (28.1, 28.2) disposed with mirror symmetry with respect to the axis (36) and each having a stop edge (27.1, 27.2) for latching into said latch opening (12) and for suspension of the base part (4).

3. Feeding pan (1) as claimed in claim 2, **characterised in that** the stop edge (27.1, 27.2), and therefore the cover part (5), is disposed in an axially displaceable manner with respect to the base part (4).

4. Feeding pan (1) as claimed in claims 1 to 3, **characterised in that** the cover part (5) is in the form of a truncated cone and extends into a prismatic holding part (37) to which the head part (6) can be latched.

5. Feeding pan (1) as claimed in claim 4, **characterised in that** the holding part (37) has two resilient holding tabs (38.1, 38.2) which protrude over a free edge (42) of the holding part (37) and each terminate with a button (40.1, 40.2) which engages in a latch opening (39.1, 39.2) introduced on the head part (6).

6. Feeding pan (1) as claimed in any one of claims 1 to 5, **characterised in that**
- a peripheral web (10) with support feet (30) which is disposed between the edge (8) and the turret (11) is installed into the base part (4),
- the web (10) has an edge (41) facing the feed channel (7),
- outlet windows (32) are provided on the web (10),
- and between the support feet (30) further outlet windows (33) are provided which are defined by the edge (41) of the web (10) and a surface (43) of the feed channel (7).

7. Feeding pan (1) as claimed in any one of claims 1 to 6, **characterised in that**
- the cover part (5) has a peripheral web (15) which is connected to the edge (13) via radial cross-braces (16), wherein the cross-braces (16) leave openings (17) free between them,
- outlet windows (31) are introduced on the web (15), each being disposed between two cross-braces (16),
- the web (15) has a free peripheral edge (44),
- and located between the outlet windows (31) and the edge (44) is a windowless region (34) of the web (15).

8. Feeding pan (1) as claimed in claims 6 and 7, **characterised in that**, when the feeding pan (1) is in the assembled state, the webs (10; 15) are oriented perpendicular to a standing surface (E) of the base part (4).

9. Feeding pan (1) as claimed in claims 6 and 7, **characterised in that**
- the outlet windows (32) of the base part (4) - when the cover part (5) is in an upper position (X) - are closed by the windowless region (34) of the web (15) disposed on the cover part (5), and
- when the cover part (5) is in a lower position (Y), the outlet windows (32) of the base part (4) coincide with the outlet windows (31) of the web (15) disposed on the cover part (5) and form throughgoing openings (19) at those locations.

10. Feeding pan (1) as claimed in any one of claims 1 to 9, **characterised in that** the head part (6), cover part (5) and base part (4) are produced from thermoplastic synthetic material.

11. Feeding pan (1) as claimed in any one of claims 1 to 10, **characterised in that** the edge (8) of the base part (4) and the edge (13) of the cover part (5) are circular, elliptical or polygonal when the standing surface (E) is seen in plan view.

## Revendications

1. Plateau d'alimentation (1) pour l'élevage de volailles, en particulier de volailles d'engraissement pouvant se déplacer librement dans une stalle, le plateau d'alimentation (1) peut être suspendu à un tube d'alimentation en fourrage maintenu au-dessus du sol, et que l'on relever et abaisser et où le tube d'alimentation en fourrage (2) comporte au moins une ouverture (3), à travers lequel le fourrage peut parvenir au plateau d'alimentation (1) et tandis que le plateau d'alimentation (1) comprend les composants suivants :
une partie inférieure (4) avec une goulotte d'alimentation (7) sur tout le pourtour, goulotte entourée vers l'extérieur par un bord périphérique (8) avec un col externe (9) et présente une coupole conique (11) vers l'intérieur,
une partie couvercle (5), entourée vers l'extérieur par un bord (13) sur tout le pourtour,
une partie tête (6) avec une ouverture (20) pour fixation sur le tube d'alimentation en fourrage (2),
où la partie tête (6), la partie couvercle (5) et la partie inférieure (4) sont reliées de manière amovible l'une à l'autre et au moins la partie couvercle (5) et la partie inférieure (4) sont mobiles l'une par rapport à l'autre dans le sens d'un axe (36) dirigé perpendiculairement au bord périphérique (8 ; 13),
**caractérisé en ce que**
que la partie couvercle (5) est pourvue d'au moins un élément d'encliquetage (26) au niveau de son extrémité (25) tournant le dos au bord périphérique (13), qui s'engrène dans une ouverture d'encliquetage (12) aménagée au niveau d'un sommet (29) de la coupole (11) une fois le plateau d'alimentation (1) assemblé.

2. Plateau d'alimentation (1) selon la revendication 1, **caractérisé en ce que** élément d'encliquetage (26) comporte deux langues élastiques (28.1, 28.2), disposées de manière homothétique par rapport à l'axe (36), langues qui présentent respectivement une arête de butée (27.1, 27.2) pour encliquetage dans ladite ouverture d'encliquetage (12) et pour suspendre la partie inférieure (4).

3. Plateau d'alimentation (1) selon la revendication 2, **caractérisé en ce que** l'arête de butée (27.1, 27.2) et donc la partie couvercle (5) sont disposées pour se déplacer dans l'axe par rapport à la partie inférieure (4).

4. Plateau d'alimentation (1) selon les revendications 1 à 3, **caractérisé en ce que** la partie couvercle (5) est de forme tronconique et se termine par une partie de retenue prismatique (37) avec laquelle la partie tête (6) est encliquetable.

5. Plateau d'alimentation (1) selon la revendication 4, **caractérisé en ce que** la partie de retenue (37) comprend deux pattes de retenue élastiques (38.1, 38.2), pattes faisant saillie d'un bord libre (42) de la partie de retenue (37) et se terminant respectivement par un bouton (40.1, 40.2) qui s'engrène dans une ouverture d'encliquetage (39.1, 39.2) prévue sur la partie tête (6).

6. Plateau d'alimentation (1) selon l'une des revendications 1 à 5, **caractérisé en ce que**
la partie inférieure (4) comprend une entretoise (10) avec des pieds de support (30), entretoise disposée entre le bord (8) et la coupole (11),
l'entretoise (10) comprend une arête (41) faisant face à la goulotte d'alimentation (7), des fenêtres de distribution (32) sont prévues au niveau de l'entretoise,
et d'autres fenêtres de distribution (33) sont prévues entre les pieds de support (30), qui sont limités par l'arête (41) de l'entretoise (10) et une surface (43) de la goulotte d'alimentation (7).

7. Plateau d'alimentation (1) selon l'une des revendications 1 à 6, **caractérisé en ce que**
la partie couvercle (5) présente une entretoise périphérique (15), qui est reliée au bord (13) par le biais de longerons transversaux radiaux (16), où les longerons transversaux (16) laissent de la place pour des ouvertures (17) entre eux,
des fenêtres de distribution (31) sont prévues au niveau de l'entretoise (15), fenêtres qui sont disposées respectivement entre deux longerons transversaux (16),
l'entretoise (15) comprend une arête libre, périphérique (44),
et une zone sans fenêtre (34) de l'entretoise (15) est située entre les fenêtres de distribution (31) et l'arête (44).

8. Plateau d'alimentation (1) selon les revendications 6 et 7, **caractérisé en ce que** les entretoises (10; 15) sont orientées perpendiculairement à une surface d'appui (E) de la partie inférieure (4) avec le plateau d'alimentation assemblé (1).

9. Plateau d'alimentation (1) selon les revendications 6 et 7, **caractérisé en ce que**
les fenêtres de distribution (32) de la partie inférieure (4) - dans le cas d'une partie couvercle (5) se trouvant dans la position supérieure (X) - sont fermées par la zone sans fenêtre (34) de l'entretoise (15) disposée au niveau de la partie couvercle (5), et
dans le cas d'une partie couvercle (5) se trouvant dans une position inférieure, les fenêtres de distribution (32) de la partie inférieure (4) coïncident avec les fenêtres de distribution (31) de l'entretoise (15) disposée au niveau de la partie couvercle (5) et y forment des ouvertures (19) continues.

10. Plateau d'alimentation (1) selon l'une des revendications 1 à 9, **caractérisé en ce que** la partie tête (6), la partie couvercle (5) et la partie inférieure (4) sont constituées d'un matériau thermoplastique.

11. Plateau d'alimentation (1) selon l'une des revendications 1 à 10, **caractérisé en ce que** le bord (8) de la partie inférieure (4) de même que le bord (13) de la partie couvercle (5) sont en vue de dessus de la surface d'appui (E), circulaires, elliptiques ou polygonaux.
